Europäisches Patentamt

European Patent Office

Office européen des brevets

(11) Publication number: **0 063 669**
**B1**

# EUROPEAN PATENT SPECIFICATION

(45) Date of publication of patent specification: **08.01.86**

(51) Int. Cl.⁴: **F 27 D 17/00, C 21 C 5/40,
F 27 B 14/08, B 22 D 41/00,
B 08 B 15/02**

(21) Application number: **81830163.2**

(22) Date of filing: **17.09.81**

(54) Apparatus for aspirating secondary fumes in steel mills and foundries.

(30) Priority: **23.04.81 IT 8336681**

(43) Date of publication of application:
**03.11.82 Bulletin 82/44**

(45) Publication of the grant of the patent:
**08.01.86 Bulletin 86/02**

(84) Designated Contracting States:
**AT BE CH DE FR GB LI LU NL SE**

(56) References cited:
**EP-A-0 003 357
EP-A-0 006 084
DE-A-2 511 387
DE-B-1 217 028
DE-B-1 228 257
US-A-2 923 227**

(73) Proprietor: **DANECO-DANIELI ECOLOGIA Spa
Via Beltrame, 28
I-33042 Buttrio (UD) (IT)**

(72) Inventor: **Castelli, Luigi
Via Palestrina, 1
I-34100 Trieste (IT)**

(74) Representative: **Petraz, Gilberto Luigi
G.L.P. S.a.s. di Gilberto Petraz P.le Cavedalis 6/2
I-33100 Udine (IT)**

Courier Press, Leamington Spa, England.

## Description

This invention concerns an apparatus for aspirating secondary fumes in steel mills and foundries. To be more exact, this invention concerns an apparatus for aspirating secondary fumes given off by smelting furnaces, converters, crucibles and ladles in steel mills and/or foundries.

According to the invention movable hoods are solidly fixed to cranes or service bridge cranes.

It is known that the bays of the sheds wherein smelting and/or casting furnaces are located are served by overhead travelling cranes or cranes of another type which handle the materials concerned with the production processes, such as materials for charging smelting furnaces, ladles for casting molten metal, etc.

The presence of these cranes makes it necessary to instal hoods which extract the fumes developed by the various sources thereof, above the surface where the sources are handled or at least above the working area of the sources.

Such a lay-out determines the minimum distance possible between the level of emission of the fumes and the level at which they are extracted by the hoods.

This limitation has an effect on the flow of air and fumes to be extracted through the hoods, for the greater the aforesaid distance, the greater the flow has to be. This fact has as its outcome higher installation and working costs for the extraction and purification plant.

Other attempts to overcome this problem are also known even though they have been developed to the point of conforming actual cells within which the furnaces, and above all the arc furnaces, are positioned.

For instance, US—A—3806622 is known in which an installation is contemplated that cooperates with an arc furnace and encloses it fully This installation, however, envisages the arc furnace as being on wheels and capable of being moved but does not visualize the possibility of acting with a bridge crane except for the movement of the furnace itself.

US—A—3,913,898 is also known which again envisages an installation enclosing the smelting furnace and ladle that can be moved on rails.

US—A—3938788 is also known and visualises an installation which encloses the arc furnace but at the same time cooperates with a crane.

The trolleys running lengthwise on the crane cooperate with movable panels that serve to shut and fill appropriate openings in the installation itself. Such a crane is substantially stationary and the trolleys move along the crane itself.

DE—A—2511387 is also known and again proposes substantially the content of US—A—3938788.

US—A—4088824 sets forth an integral installation, which, however, envisages a movable ladle underneath.

FR—A—2381107 visualises a box-wise installation of a complex type which, like all the others we have examined, concerns only the furnace.

EP—A—0006084 teaches a solution in which a hood is solidly fixed to the trolley of the bridge crane and can move with that trolley. The hood can cooperate with a stationary aspiration duct.

This known solution is restricted to being applied to metallurgical vessels such as crucibles, ladles, etc. since the trolley in question cannot sustain hoods of large sizes, such as those needed for the extraction of fumes produced by electrical arc furnaces.

EP—A—0003357 teaches a system in which the furnace is enclosed within a capsule formed with two shells that can be opened. These shells open for the entry and the exit of the charging or casting vessel.

The extraction of fumes while the shells are opened is entrusted to a hood which is solidly fixed to the bridge crane and which can locate itself so as to correspond and cooperate with a stationary aspiration duct.

However, this system entails various drawbacks and shortcomings. A first drawback consists in the fact that, as there is a considerable distance between the vessel, or furnace, and the hood, the flow of aspirated air has of necessity to be great.

A second drawback is the absence, in the lower part of the hood, of sealing elements which would prevent the departure of fumes from the side where the fumes enter.

Moreover, the patent cited has a system of closure of the hood with a movable portion solidly fixed to the trolley. This system cannot ensure a good seal on the closure side because of the need to position the trolley.

If the flow of air to be aspirated, therefore, is to be able to achieve a good efficiency in discharge of fumes, it has to be greater.

DE—B—1228287 teaches a system with a hood of modest dimensions located immediately above a vessel, such as a ladle or crucible, and able to move therewith. Owing to its size and positioning this hood cannot be very efficient in view of the fact that the flow of fumes to be aspirated has a high upward speed owing to the high temperature. As a result the flow to be aspirated is very great. Moreover, this invention cannot be used for discharging fumes generated by an electrical arc furnace.

DE—B—1217028 teaches a solution suitable only for small vessels and not applicable to smelting furnaces.

US—A—2923227 proposes a system like the two preceding systems and applicable to small metallurgical vessels in movement.

All known installations envisage that the smelting furnace is served and isolated but that the casting zone is still served by extraction systems located above the bridge crane; they therefore only overcome the problem partially. Moreover, not all installations of a known kind can be applied to the case of smelting furnaces.

Furthermore, operations are hindered and are complex and the benefits (as regards noise) are not such as to compensate for the delays, mis- deliveries, and so on.

The author of the present invention has therefore studied, tested and embodied movable hoods which cooperate with cranes or bridge cranes and are of an extremely simple, functional and, above all, efficient type.

The apparatus proposed in our invention arranges only for extraction of fumes and vapours but does so in a fundamental way coordinated with any desired requirement of steel mills and/or foundries.

The apparatus of this invention is therefore satisfactory for all the applications mentioned.

According to the invention an aspiration duct is envisaged as being positioned lengthwise along the shed and advantageously along one wall. This aspiration duct is provided with aspiration intakes which can be closed and which cooperate with appropriate outlets in hoods which in turn cooperate with the bridge crane.

Thus the aspiration action is carried out in the hoods but only in desired positions.

As compared with conventional systems for extracting secondary fumes, the hoods of the invention provide many advantages, including:— maximum efficiency of extraction of fumes since the distance between the level of aspiration by the hood and the zone of generation of the fumes themselves is lessened; minimization of aspiration flow with a resulting reduction in the sizes of the plant to extract and purify fumes; a drastic reduction in the power needed to aspirate secondary fumes and a resulting reduction in working costs; the possibility of installing hoods without having to modify the supporting structures of the roofs of the sheds when it is necessary to instal plant for extracting secondary fumes in existing sheds; shorter times for installing hoods with a resulting reduction in downtimes for plants when work is to be done in existing plants; and the ability to serve several zones generating fumes with one hood alone.

For instance, only one hood mounted on a crane can be used for two furnaces when the furnaces are not to be charged at one and the same time, or two hoods can be used for three furnaces; this example is also applicable for hoods for the casting process.

The invention is therefore displayed with an apparatus for aspirating secondary fumes given off by smelting furnaces, converters, crucibles and ladles in steel mills and/or foundries, such apparatus comprising:— a movable hood installed on and solidly fixed to a crane or bridge crane; a stationary aspiration duct with intakes; an outlet for momentary connection of the movable hood to the intakes; openings which permit the passage of a trolley of the bridge crane and are included in the movable hood; and means for momentary closure of the openings, the apparatus being characterized in that the closure means are solidly fixed to the movable hood and the stationary aspiration duct is disposed lengthwise along the path of the bridge crane, and the intakes are equipped with an adjustable gate valve.

The invention will be shown now by making use of the attached tables, which are given as a non-restrictive example and wherein:—

Figs. 1a and 1b show a conventional apparatus;

Figs. 2a and 2b show an apparatus according to the invention in diagrammatical cross section views of the sheds;

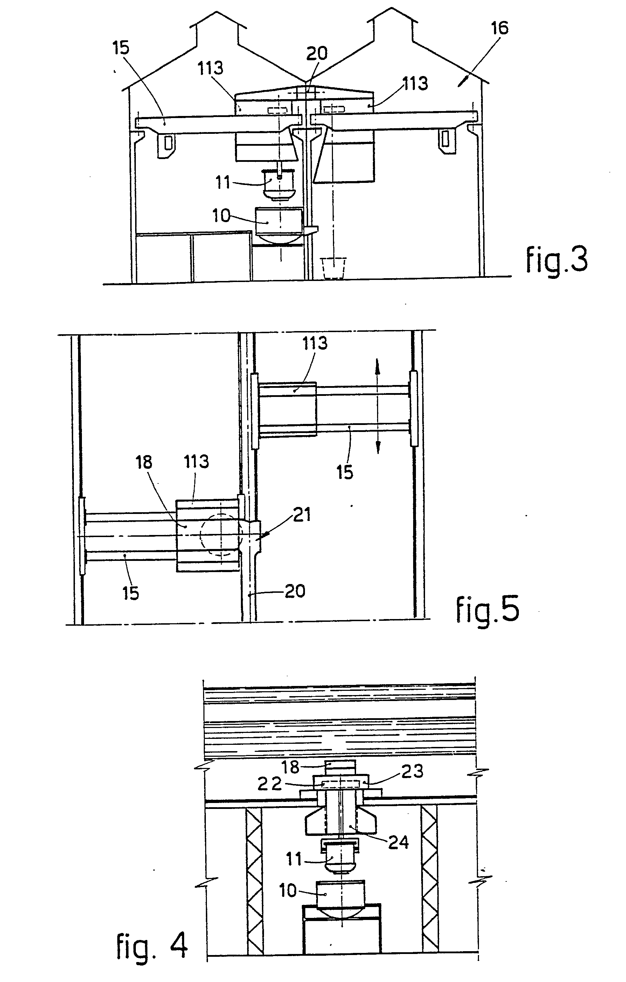

Figs. 3 to 5 show three perspectives of the apparatus according to the invention in side, plan and frontal views respectively;

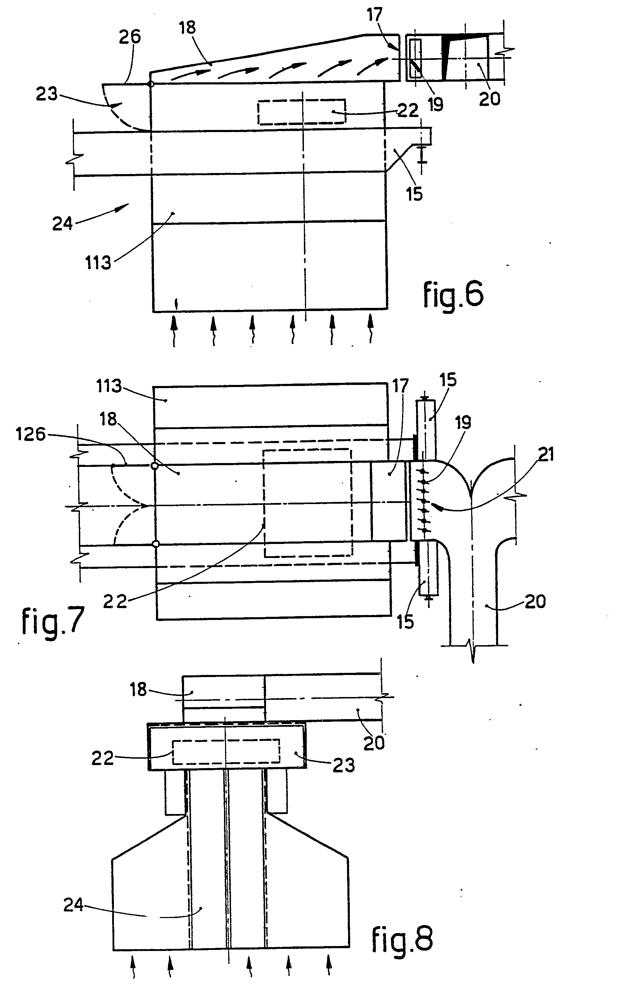

Figs. 6 to 8 show in detail a preferred lay-out of the apparatus according to the invention according to three views, side, plan and frontal respectively.

In the figures the same parts bear the same reference numbers.

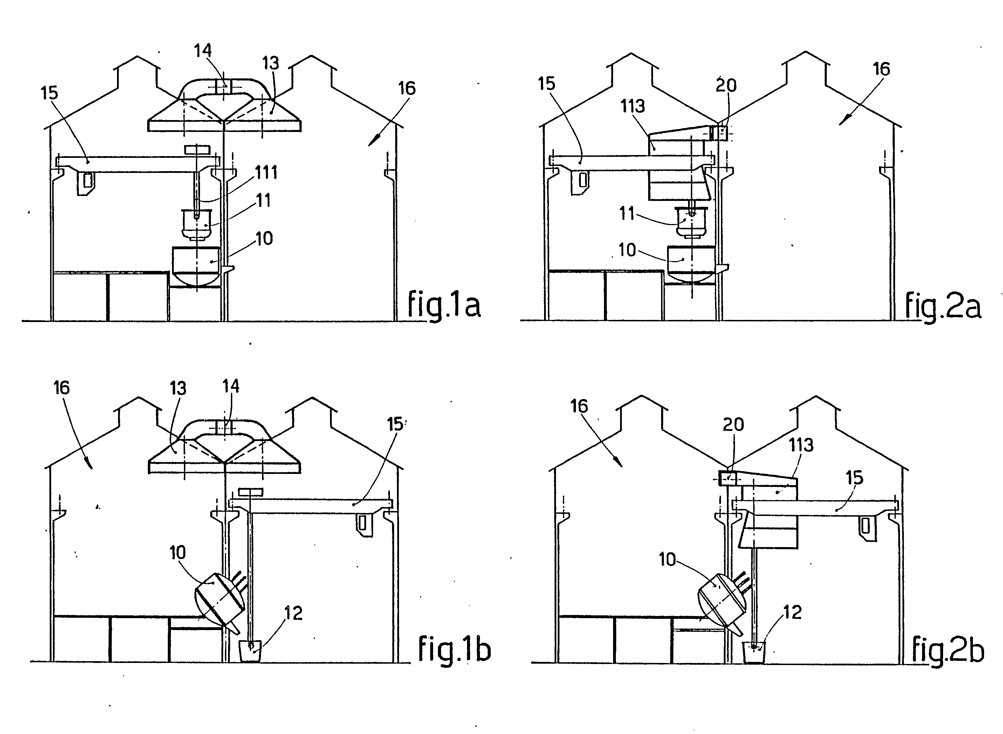

In the known art the extraction of secondary fumes (Figs. 1a and 1b) given off by a furnace 10 while it is being charged with a skip 11 holding materials to be smelted, and by a ladle 12 while the latter is casting the molten steel, is carried out by means of one or more stationary hoods 13, connected to a lengthwise aspiration duct (14) fitted above service bridge cranes 15 working in bays 16 where operations are taking place.

This system leaves a great deal of space between the aspirating hood means 13 and the means giving off the fumes 10—12. This is not satisfactory.

Instead, our invention visualises movable hoods 113 installed on bridge cranes 15 and cooperating with a lengthwise aspiration duct 20.

Where the furnace 10 and ladle 12 are located in separate bays 16, the movable hoods 113 are positioned on the respective bridge cranes 15 which handle the skips 11 charging the scrap and/or other charging systems and which take to the casting position the ladle 12 that receives the molten metal.

Thus the hoods 113 are situated in the right working position just when they are carrying out operations either on the furnace 10 or ladle 12 generating the fumes to be extracted.

When the hood fitted to the bridge crane 15 is in its working position, an outlet 17 of a duct 18 conveying fumes aspirated by the hood 113 faces so as to correspond with an intake 19 present in a stationary duct 20 of the extraction plant.

The outlet 17 and intake 19 can be equipped with sealing systems (elastic flanges, sliding sleeves, etc.) and with shut-off gate valves 21.

The gate valves 21 can be opened and shut automatically to suit the movement of the crown of the furnace 10 (charging hood) or the slope thereof (casting hood). The gate valve 21 can also be operated by remote control by the driver of the crane 15 or by another plant operative.

To permit the entry and exit of a trolley 22 of the crane 15 and its relative charge 11 (skip with scrap, magnet with scrap, ladle, and so on), the hood 113 is provided with suitable openings 23—24 in the zones where the trolley 22 and cables 111 bearing the charge and the charge 11 itself pass through.

To ensure the efficiency of the system of suction of the hoods 113 together with the minimum possible flow, the openings 23—24 are equipped with devices 26 which close them after the trolley 22 of the crane 15 has passed.

Such devices can consist of shutters 26—126, optionally with an automatic control linked to the position of the trolley 22 or operated by remote control.

The shutters 26—126 can be of a type opening on the hinge or of a telescopic type or with sliding sections, or can have another suitable system.

The mechanical devices 26—126 cited can be replaced with air curtain seals or plastic film shields.

But in all cases, if the hood 13 has its side and upper surfaces fully airtight during the emission of fumes, as described above, the maximum extraction capacity and minimum aspiration flow are obtained thereby.

## Claims

1. Apparatus for aspirating secondary fumes given off by smelting furnaces, converters, crucibles and ladles in steel mills and/or foundries, such apparatus comprising:— a movable hood (113) installed on and solidly fixed to a crane or bridge crane (15): a stationary aspriation duct (20) with intakes (19): an outlet (17) for momentary connection of the movable hood (113) to the intakes (19): openings (23—24) which permit the passage of a trolley (22) of the bridge crane (15) and are inluded in the movable hood (113): and means (26—126) for momentary closure of the openings (23—24), the apparatus being characterized in that the closure means (26—126) are solidly fixed to the movable hood (113) and the stationary aspiration duct (20) is disposed lengthwise along the path of the bridge crane (15), and the intakes (19) are equipped with an adjustable gate valve (21).

2. Apparatus as claimed in Claim 1, in which the gate valve (21) in the intakes (19) of the lengthwise aspiration duct (20) can be actuated momentarily when necessary and is opened to coincide at least momentarily with the outlet (17) of the movable hood (113).

3. Apparatus as claimed in Claim 1, in which sealing means which act at least momentarily are included between the intakes (19) of the lengthwise aspiration duct (20) and the outlet (17) of the movable hood (113).

4. Apparatus as claimed in any claim hereinbefore, in which the stationary aspiration duct (20) is disposed between two neighbouring bays (16) and has intakes (19) facing each of the bays (16).

5. Apparatus as claimed in any claim hereinbefore, in which the closure means (26—126) are actuated automatically, the actuation being linked to the position of the trolley (22).

6. Apparatus as claimed in any claim hereinbefore, in which the closure means (26) are actuated by remote control.

7. Apparatus as claimed in any claim hereinbefore, in which the means (26) to close the openings (23 and 24) in the movable hood (113) are mechanical means.

8. Apparatus as claimed in any of Claims 1 to 6 inclusive, in which the means (26) to close the openings (23 and 24) in the movable hood (113) are air curtains.

## Revendications

1. Appareil pour l'aspiration de fumées secondaires dégagées par des fours de fusion, convertisseurs, creusets et poches dans des aciéries et/ou fonderies, cet appareil comprenant:
— une hotte mobile (113) installée et fixée solidement sur une grue ou une grue à pont (15); un conduit d'aspiration fixe (20) muni d'entrées (19); une sortie (17) pour la liaison momentanée de la hotte mobile (113) avec les entrées (19); des ouvertures (23, 24) qui permettent le passage d'un chariot (22) de la grue à pont (15) et sont incluses dans la hotte mobile (113); et des moyens (26, 126) de fermeture momentanée des ouvertures, (23, 24), l'appareil étant caractérisé par le fait que les moyens de fermeture (26, 126) sont fixés solidement à la hotte mobile (113) et que le conduit d'aspiration fixe (20) est disposé longitudinalement le long du parcours de la grue à pont (15) et que les entrées (19) équipées d'une vanne réglable (21).

2. Appareil selon la revendication 1, dans lequel la vanne (21) des entrées (19) du conduit d'aspiration longitudinal (20) peut être actionnée momentanément quand c'est nécessaire et s'ouvre pour coïncider au moins momentanément avec la sortie (17) de la hotte mobile (113).

3. Appareil selon la revendication 1, dans lequel des moyens d'étanchéité qui agissent au moins momentanément sont inclus entre les entrées (19) du conduit d'aspiration longitudinal (20) et la sortie (17) de la hotte mobile (113).

4. Appareil selon l'une quelconque des revendications précédentes, dans lequel le conduit d'aspiration fixe (20) est disposé entre deux travées voisines (16) et présente des entrées (19) tournées vers chacune des travées (16).

5. Appareil selon l'une des revendications précédentes, dans lequel les moyens de fermeture (26, 126) sont actionnés automatiquement, l'actionnement étant lié à la position du chariot (22).

6. Appareil selon l'une des revendications précédentes, dans lequel les moyens de fermeture (26) sont actionnées par commande à distance.

7. Appareil selon l'une des revendications précédentes, dans lequel les moyens (26) servant à fermer les ouvertures (23 et 24) dans la hotte mobile (113) sont des moyens mécaniques.

8. Appareil selon l'une quelconque des revendications 1 à 6 inclusivement, dans lequel les moyens (26) servant à fermer les ouvertures (23 et 24) de la hotte mobile (113) sont des rideaux d'air.

**Patentansprüche**

1. Vorrichtung zum Absaugen der Sekundärabgase von Schmelzöfen, Konvertern, Schmelztiegeln und Gießpfannen in Stahlwerken und/oder Gießereien, bestehend aus: einer verfahrbaren Haube (113), die an einem Kran bzw. Brückenkran (15) fest befestigt ist: einem stationären Absaugkanal (20) mit Einlässen (19): einem Auslaß (17) zur vorübergehenden Verbindung der verfahrbaren Haube (113) mit den Einlässen (19): Öffnungen (23, 24) in der verfahrbaren Haube (113) zum Durchtritt einer Laufkatze (22) des Brückenkranzes (15): und Organen (26, 126) zum vorübergehenden Verschluß der Öffnungen (23, 24) dadurch gekennzeichnet, daß die Verschlußorgane (26, 126) fest an der verfahrbaren Haube (113) befestigt sind, der stationäre Absaugkanal (20) der Länge nach entlang der Bewegungsbahn des Brückenkranes (15) angeordnet ist und die Einlässe (19) mit regulierbaren Absperrungen (21) versehen sind.

2. Vorrichtung nach Anspruch 1, dadurch gekennzeichnet, daß die Absperrungen (21) in den Einlässen (19) des Absaugkanals (20), soferne notwendig, vorübergehend betätigbar und zum mindestens vorübergehenden Übereinstimmen mit dem Auslaß (17) der verfahrbaren Haube (113) öffenbar sind.

3. Vorrichtung nach Anspruch 1, dadurch gekennzeichnet, daß mindestens vorübergehend wirkende Dichtorgane zwischen den Einlässen (19) des Absaugkanals (20) und dem Auslaß (17) der beweglichen Haube (113) angeordnet sind.

4. Vorrichtung nach einem der vorstehenden, Ansprüche, dadurch gekennzeichnet, daß der stationäre Absaugkanal (20) zwischen zwei benachbarten Hallenfeldern (16) angeordnet ist und zu jedem Hallenfeld (16) hin gewendete Einlässe (19) aufweist.

5. Vorrichtung nach einem der vorstehenden Ansprüche, dadurch gekennzeichnet, daß die Verschlußorgane (26, 126) automatisch betätigbar sind, wobei die Betätigung mit der Stellung der Laufkatze (22) verkettet ist.

6. Vorrichtung nach einem der vorstehenden Ansprüche, dadurch gekennzeichnet, daß die Verschlußorgane (26) durch Fernsteuerung betätigbar sind.

7. Vorrichtung nach einem der vorstehenden Ansprüche, dadurch gekennzeichnet, daß die Organe (26) zum Schließen der Öffnungen (23, 24) in der verfahrbaren Haube (113) mechanische Organe sind.

8. Vorrichtung nach einem der Ansprüche 1 bis 6, dadurch gekennzeichnet, daß die Organe (26) zum Schließen der Öffnungen (23, 24) in der verfahrbaren Haube (113) Luftvorhänge sind.

fig.1a

fig.2a

fig.1b

fig.2b

0 063 669

fig.3

fig.5

fig. 4

fig.6

fig.7

fig.8

3